(19) Europäisches Patentamt
European Patent Office
Office européen des brevets

(11) **EP 3 646 606 B1**

(12) **EUROPEAN PATENT SPECIFICATION**

(45) Date of publication and mention
of the grant of the patent:
**28.07.2021 Bulletin 2021/30**

(21) Application number: **18734238.1**

(22) Date of filing: **29.06.2018**

(51) Int Cl.:
*H04N 19/82* (2014.01)    *G06T 7/13* (2017.01)
*H04N 19/176* (2014.01)    *H04N 19/172* (2014.01)
*H04N 19/117* (2014.01)    *H04N 19/136* (2014.01)
*H04N 19/18* (2014.01)

(86) International application number:
**PCT/EP2018/067673**

(87) International publication number:
**WO 2019/002588 (03.01.2019 Gazette 2019/01)**

(54) **VIDEO CODING CONCEPT USING PREDICTION LOOP FILTER**

VIDEOCODIERUNGSKONZEPT UNTER VERWENDUNG EINES PRÄDIKTIONSSCHLEIFENFILTERS

CONCEPT DE CODAGE DE VIDÉO UTILISANT UN FILTRE À BOUCLE DE PRÉDICTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2017 EP 17179217**

(43) Date of publication of application:
**06.05.2020 Bulletin 2020/19**

(73) Proprietor: **Fraunhofer-Gesellschaft zur Förderung der angewandten Forschung e.V.
80686 München (DE)**

(72) Inventors:
• **LIM, Wang-Q
14052 Berlin (DE)**
• **GUZY, Johannes
10409 Berlin (DE)**
• **SIEKMANN, Mischa
10439 Berlin (DE)**
• **MARPE, Detlev
14195 Berlin (DE)**
• **SCHWARZ, Heiko
16341 Panketal (DE)**
• **WIEGAND, Thomas
14195 Berlin (DE)**

(74) Representative: **Schenk, Markus et al
Schoppe, Zimmermann, Stöckeler
Zinkler, Schenk & Partner mbB
Patentanwälte
Radlkoferstrasse 2
81373 München (DE)**

(56) References cited:
**WO-A1-2008/153856    US-A1- 2013 243 104**

• **LAKSHMAN H ET AL: "Image interpolation using shearlet based sparsity priors", 2013 IEEE INTERNATIONAL CONFERENCE ON IMAGE PROCESSING, IEEE, 15 September 2013 (2013-09-15), pages 655-659, XP032965705, DOI: 10.1109/ICIP.2013.6738135 [retrieved on 2014-02-11]**
• **KAWAMURA K ET AL: "Adaptive loop filtering using directional activity", 96. MPEG MEETING; 21-3-2011 - 25-3-2011; GENEVA; (MOTION PICTURE EXPERT GROUP OR ISO/IEC JTC1/SC29/WG11),, no. m19708, 18 March 2011 (2011-03-18), XP030048275,**

EP 3 646 606 B1

**Description**

The present application is concerned with predictive coding and decoding of pictures such as applicable in hybrid video codecs, for example.

Video codecs and still picture codecs use block-based predictive coding to compress the data used to represent the picture content. The better the prediction is, the lower the data needed to code the prediction residual. The overall benefit from using prediction depends on the amount of data needed to keep the prediction synchronized between encoder and decoder, i.e. the data spent for prediction parameterization.

WO 2008/153856 A1 discloses a method for in-loop de-artifacting filtering based on multilattice sparsity-based filtering. This filtering is performed by thresholding; this entails that the classified are not modified/processed in the frequency domain: thus, this prior art document does not hint at applying a processing adapted to the classified coefficient in the transform domain.

In prior art adaptive loop filters, where each pixel is classified and a specific filter is applied accordingly, are known (cf. Kawamura K et al. "Adaptive Loop Filtering using directional activity", 96. MPEG meeting; 21-3-2011 - 25-3-2011; Geneva; (Motion picture expert group of ISO/IEC JTC1/SC29/WG11)" no. m19708, 18 March 2011; US 2013/243104 A1), even though after having estimated the directional activity (cf. Kawamura K et al. "Adaptive Loop Filtering using directional activity", 96. MPEG meeting; 21-3-2011 - 25-3-2011; Geneva; (Motion picture expert group of ISO/IEC JTC1/SC29/WG11)" no. m19708, 18 March 2011). However, the disclosed methods do not operate in the transform domain, in particular, the do not hint at adapting the filtering to the classes computer in the shearlet domain as claimed.

The object of the present invention is to provide a concept for predictive encoding/decoding of a picture with increased coding efficiency, such as by facilitating improved de-blocking and/or de-noising.

This object is achieved by the subject matter of the independent claims.

A basic finding of the present invention is that a shearlet domain is used for improving de-blocking and/or de-noising. A shearlet transform is used on a picture or a portion thereof leading to a transformation into the shearlet domain. In the shearlet domain, the coefficients, which are the result of the transformation, i.e. the shearlet coefficients, are classified according to their values and, using the classification, the re-transforming is controlled in a manner so that coefficients of different classes differently contribute to the resulting retransform, i.e. the in-loop filtered result.

In a preferable embodiment, a decoder comprises a prediction loop filter which is configured to apply a shearlet transform with a set of shearlet filters onto at least a picture portion so as to obtain a set of coefficient matrices, subject coefficients of the set of coefficient matrices to classification so as to obtain a set of partial coefficient matrices per coefficient matrix, derive an in-loop filtered version of the picture portion by subjecting the set of partial coefficient matrices of the set of coefficient matrices to a shearlet retransform with a set of dual shearlet filters and summation, wherein, for each coefficient matrix, the partial coefficient matrices differently contribute to the in-loop filtered version.

In a further preferable embodiment, an encoder comprises a prediction loop filter that is configured to apply a shearlet transform with a set of shearlet filters onto at least a picture portion so as to obtain a set of coefficient matrices, to subject coefficients of the set of coefficient matrices to classification so as to obtain a set of partial coefficient matrices per coefficient matrix, to derive an in-loop filtered version of the picture portion by subjecting the set of partial coefficient matrices of the set of coefficient matrices to a shearlet retransform with a set of dual shearlet filters and summation, wherein, for each coefficient matrix, the partial coefficient matrices differently contribute to the in-loop filtered version and to insert information on the shearlet filters into a data stream.

In another preferable embodiment, a video coding system comprises a decoder according to the above preferable embodiment and an encoder according to the above further preferable embodiment.

In accordance with an embodiment, the video encoder keeps the mode of operation of the prediction loop filter between video encoder and decoder synchronized by determining and signaling to the video decoder one or more of a classification information for controlling the classification, shearlet information for controlling the shearlet transform or shearlet domain, respectively, and filter information for applying filtering to the different classes of shearlet coefficients which application may be performed on one or more class-specific partial retransforms or on the sherarlet coefficients of one or more classes directly. The filter information may contain one or more filter coefficients for each of a subset of the classes so that the classes are filtered differently or, differently speaking, with respective/separate coefficients. The additional signaling overhead may be over-compensated by the increase in prediction accuracy and the coding efficiency resulting therefrom.

In accordance with an embodiment, the video encoder and video decoder perform apply the prediction loop filter picture globally with the picture portion covering the whole picture width, or in units of blocks with the picture portion being such a block. The above mentioned signaling, i.e. classification information, shearlet information and/or filter information and, additionally or alternatively, signaling for activating/deactivating the prediction loop filter, may be signaled in such units, i.e. on picture level or block level.

Advantageous implementations of the present application are the subject of the dependent claims. Preferred embodiments of the present application are described below with respect to the figures, among which

Fig. 1    shows a block diagram of an decoding apparatus in accordance with an embodiment of the present application;

Fig. 2    shows a block diagram of an encoding apparatus in accordance with an embodiment of the present application;

Fig. 3    shows a schematic diagram of examples of differently shaped Wiener filters, with Fig. 3a showing an example of using a quadratic filter kernel for filtering and Fig., 3b showing an example of using a diamond-shaped filter kernel for filtering; and

Fig. 4    shows block diagram of a prediction loop filter as an example for an internal structure thereof in video encoder or video decoder, respectively, in accordance with a respective embodiment of the present application.

The description starts with a brief explanation of shearlet so as to motivate the embodiments for video encoder and video decoder which use a shearlet-based loop filter (SLF) as a de-noising and/or de-blocking tool.
The fundamental property of shearlets is that the essential information of the image governed by anisotropic features such as edges can be identified by just few shearlet coefficients whose absolute values are large while most of its coefficients are nearly zero. This leads to sparse representations for a large class of natural images, which means those images can be optimally approximated by taking a few significant coefficients. This property is beneficial not only for data compression but also for de-noising, feature extraction, classification and other higher level tasks. The underlying assumption is that most of the quantization noise in an decoded image lies in small shearlet coefficients, which manifests in e.g. blocking or ringing artefacts. Large coefficients on the other hand are less sensitive to the quantization process and represent the most important structures in an image like edges or texture. For that reason each coefficient is classified as significant or non-significant depending on its absolute value.
After classification, a Wiener filter may be applied to de-noise the distorted image followed by an inverse transform, ideally this provokes a suppression of coding artefacts and an amplifying of details in the image.
Shearlets are defined through a parabolic scale matrix $A_j$ and a shear matrix $S_k$

$$A_j = \begin{pmatrix} 2^j & 0 \\ 0 & 2^{\lceil \frac{j}{2} \rceil} \end{pmatrix},$$

$$S_k = \begin{pmatrix} 1 & k \\ 0 & 1 \end{pmatrix}$$

and constructed through scaling, shearing and translation of a 2-dimensional shearlet generator $\psi$,

$$\psi_{j,k,m} = |A|^{\frac{1}{2}} \psi(S_k A_j(\cdot - m))$$

for $j, k \in \mathbb{Z}$ and $m \in \mathbb{Z}^2$.
An important aspect of the shearlet-based loop filter is that the de-noising process takes place in the transform domain after applying a shearlet transform. In contrast to the DCT it is a multi-scale and directional transform which leads to a redundant system of shearlet coefficients.
In the context of image processing a shearlet system is a set of shearlet filters ($F_1,...,F_K$) each of the size NxM which can be applied to an image x of the same dimensions. The number of filters in the shearlet system is defined by two parameters, the number of scales S and the number of directions per scale D. In the case that S = 2 and D = 8, it is of course also possible to have a different number of directions for each scale, then the shearlet system consists of 2 times 8 filters plus one DC-filter, i.e. 17 shearlet filters. Each filter $F_1,..., F_K$ is applied separately to the image x by application of a convolution operator, which is the shearlet transform. This generates K NxM coefficient matrices $C_1,..., C_K$, i.e. $C_k = x * F_k$. To reconstruct the target image x, the inverse transform has to be applied by using dual shearlet filters $\tilde{F}_k$. The target image x can be obtained by application of the reconstruction formula $x = \sum_{k=1}^{K} (x * F_k) * \tilde{F}_k$. Shearlets are described in greater detail in Kutyniok and Labate "Shearlets: Multiscale Analysis for Multivariate Data", Birkhuser, Springer, New York, 2012 or in Kutyniok, Lemvig and Lim "Shearlets and optimally sparse approximations" in: "Shearlets: Multiscale Analysis for Multivariate Data", pp. 145-198. Birkhäuser, Springer, New York, 2012.

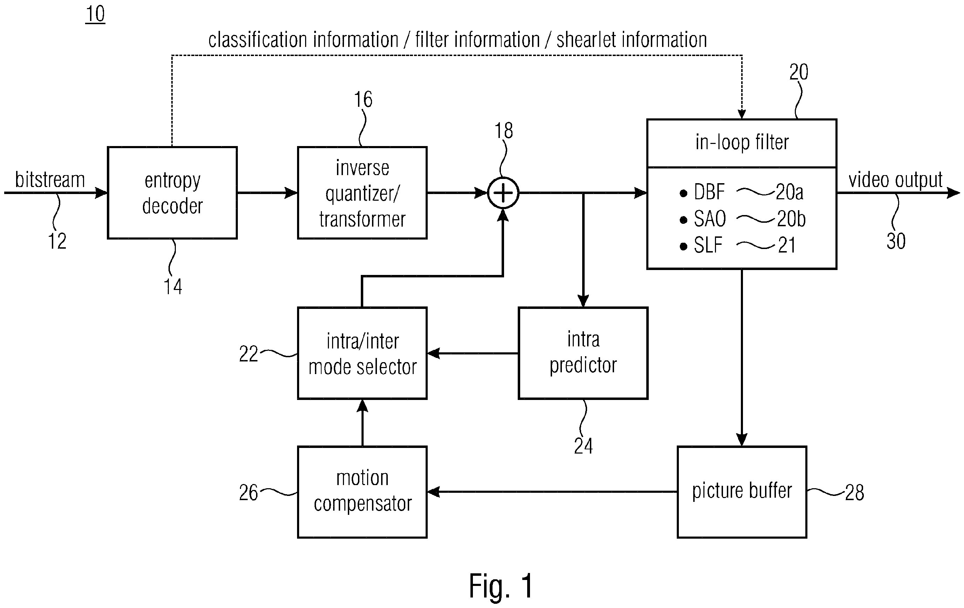

Fig. 1 shows an apparatus 10 for decoding of a bitstream 12 into a video output stream 30. Fig. 1, thus, shows an example for a video decoder which may use a SLF as proposed herein, but it should be mentioned that this specific example should be treated as limiting the embodiments of the present application to this structure.
The exemplary apparatus 10 shown in Fig. 1 comprises entropy decoder 14, inverse quantizer/transformer 16, adder 18, in-loop filter 20, mode selector 22, intra-predictor 24, motion compensator 26 and buffer 28. They are interconnected to each other in the manner shown in Fig. 1.
Fig. 1 shows that, internally, that the in-loop filter 20 may comprise de-blocking filter (DBF) 20a, sample adaptive offset filter (SAO) 20b and a shearlet-based loop filter (SLF) 21. It is apparent that not all the mentioned filters are necessary, and that e.g. the DBF and/or the SAO may be omitted or replaced e.g. with an adaptive loop filter (ALF). They filters mentioned may be connected in series into the prediction loop with, for example, the SLF being the last one in series. The prediction loop is formed by components 18, 20, 28, 26, 22 and 24 with the concatenation of modules 14 and 16 providing the prediction residual on the basis of which the prediction signal from the mode selector 22 is corrected at adder 18. In the example of Fig. 1, the SLF 20 is serially connected into that part of the prediction loop which pertains the inter prediction, i.e. the temporal prediction of a current block of a current picture based on a portion of a previous - in terms of coding order - reference picture of the video. The inter prediction is performed in module 26 by motion-compensation. It should be noted that, theoretically, SLF 20 could also be used so as to be serially connected into the part of the prediction loop concerning the intra or spatial prediction which is performed by module 24, i.e. between output of adder 18 and input of intra prediction module 24, thereby filtering for a current block or picture portion, quasi on the fly, already reconstructed video portions of the current picture serving as a possible intra prediction reference for the current block, rather than being used so as to be serially connected into the part of the prediction loop concerning the inter prediction only, which is performed by module 26, i.e. between output of adder 18 and input of picture buffer 28, thereby filtering picture portions of inter-prediction reference pictures before their use as a inter-prediction reference, but leaving intra-prediction references of already reconstructed portions of a current picture unfiltered.

The SLF 21 is performed in addition to the decoding procedure. The filter operation takes place within the coding/prediction loop, as opposed to many other commonly known filter operations performed outside the loop, either as a pre-coding or as a post decoding step. It is also possible to apply the SLF as a post filter, then the output of the filter is not used for subsequent predictions. In the intended case as an in-loop filter, the filtering process needs to be identical on the encoder and decoder side to ensure correct execution of the subsequent predictions.

The in-loop filtering process may reduce the coding noise by filtering the reconstructed image within the shearlet domain with Wiener filters created to minimize the difference from the target image as explained in next sections. The filter coefficients are coded, transmitted and decoded together with the residuals.

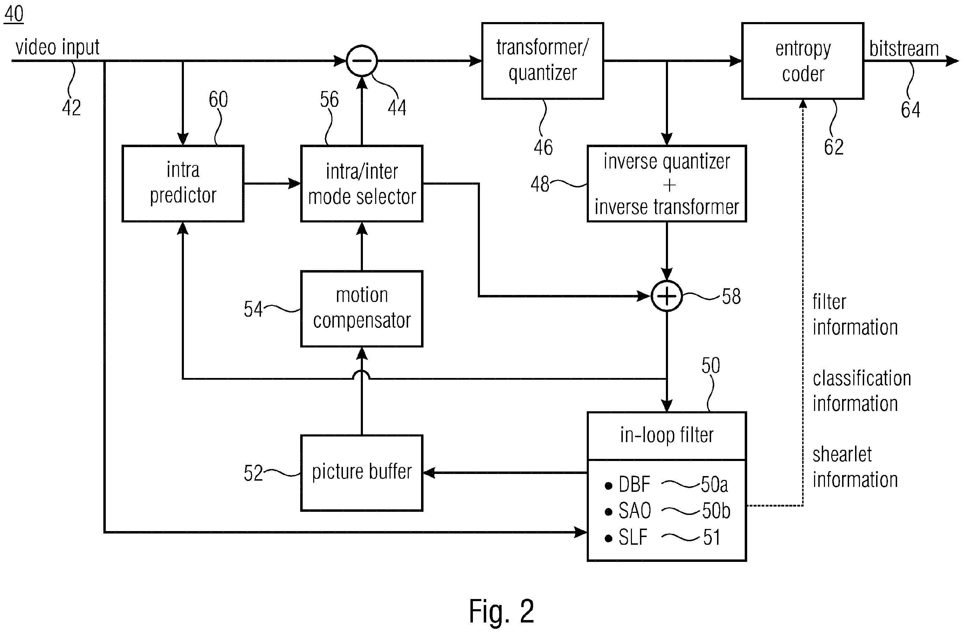

The transmission and parsing of the filter information to/from the bitstream is shown in Figure 1 and 2 as dotted lines. In addition or alternatively to the transmission of filter information, information on the shearlet transforms as well as information on a classification, which is described further below, may be transmitted.

Stated more specifically, in a manner outlined in more detail below, the components 14 to 24 are connected into a prediction loop encoder 10. The input of entropy decoder 14 is connected to the inputted bitstream 12 and its output to inverse quantizer/ inverse transformer 16, the entropy decoder serves to decode the bit stream 12 that has been encoded by an encoder from which the bitstream 12 originates. The output of the inverse quantizer/ inverse transformer 16 is connected to the adder 18, the adder serves to sum up the inputs provided from the inverse quantizer/ inverse transformer 16 and the intra/inter mode selector 22.

A loop is formed by in-loop filter 20, intra/inter mode selector 22, motion compensator 26 and picture buffer 28, wherein one of the outputs of the in-loop filter 20 is connected to the input of the picture buffer 28, the picture buffer 28 serves as a storage for the picture data output by the in-loop filter 20. The other output of the in-loop filter 20 is the decoded bit stream. The output of the picture buffer 28 is connected to the input of the motion compensator 26, the motion compensator is used for prediction of a frame or part of a frame in a video, based on previous and/or future frames by accounting for motion in the video. The output of the motion compensator 26 is connected to the input of the intra/inter mode selector 22 and the output of the intra/inter mode selector 22 is connected to one of the inputs of the adder 18, and finally the adder 18 output is the input of the in-loop filter 20. The output of the adder is also used a input for the intra-predictor 22, whose output is connected to the intra/inter mode selector 22.

The in-loop filter constituents produce from their respective inputs a N $\times$ M -dimensional decoded image y which may be then used a the input for the SLF 21. It is to be noted that the SLF 21 may also be applied before any other in-loop filter is applied or also in between, in other words it is not essential that the SLF 21 is performed as the last filter in the chain of filters of the in-loop filter 20.

The SLF 21 obtains a shearlet system on the basis of which the SLF 21 operates. This shearlet system can be fixed or adaptive. In the case the shearlet system is fixed, the number of scales and directions for each scale are predetermined, in the case the shearlet system is adaptive the number of scales and directions are parsed from the bitstream. The number of scales refers to a set of scaling parameters used to scale the shape of the shearlet. The number of directions for each scale refers to a parameter that describes the direction into which the shearlet is rotated.

After the shearlet system is obtained, the shearlet transform with K shearlet filters ($F_1$, ..., $F_K$) is applied to the decoded image y and as a result, K coefficient matrices ($C_1$, ..., $C_K$) each of size N $\times$ M are obtained.

When the shearlet coefficient matrices for the decoded image have been calculated, these shearlet coefficient matrices are classified as significant or non-significant. The classification may be done by applying one or more thresholds, but also other classification techniques can be applied. In a simple case where a single threshold is applied, a first class A may consist of all non-significant coefficients whose absolute values are smaller or equal than the threshold T . A further class B consists of all significant coefficients whose absolute values are larger than T. The value of the threshold T may be either fixed or parsed from the bitstream. Hence, in some embodiments, classification information is transmitted from encoder to decoder embedded in the bitstream.

As an example, when the number of shearlet filters is 17, there are 17 shearlet filters $F_1$ to $F_{17}$. The shearlet transform is applied to the decoded image y by convoluting the filters $F_n$ with the decoded image (y * $F_1$, ..., y * $F_{17}$) resulting in 17 coefficient matrices $C_1$ to $C_{17}$.

In the case that threshold T equals 20, this results in two classes, a first class A given by the interval $I_A$ = [0, 20] and second class B with the interval $I_B$ = (20, $\infty$). For each shearlet coefficient $C_k$ (i, j) its absolute value |Ck (i, j)| is calculated. If |Ck (i, j)| ≤ 20 it belongs to class A, otherwise to class B.

In a more general approach for classification, the number of classes may be R wherein R may be greater than two. This leads to R classes yielding R disjoint intervals with R-1 thresholds $T_1$ to $T_{R-1}$. These thresholds may be either fixed or parsed from the bitstream. The classification could be performed by taking a different or additional features to take the dependencies of neighboring coefficients into account.

After the classification, a reconstruction process is performed. In the general case of R classes, for reconstructing the image for each class, functions $\varphi_1$ to $\varphi_R$ are calculated. The functions $\varphi_1$ to $\varphi_R$ are given by

$$\varphi_r = \sum_{k=1}^{K} \chi_r(C_k) * \tilde{F}_k.$$ It is noted that if R = 2, this results in two classes A and B as described above. $\chi_r$ is the characteristic function

$$\chi_r(C_k(i,j)) = \begin{pmatrix} C_k(i,j) \\ 0 \end{pmatrix}$$ if $C_k(i,j)$ belongs to class r otherwise The sum of $\varphi_1$ to $\varphi_R$ reconstructs to input image: $$y = \sum_{r=1}^{R} \sum_{k=1}^{K} \chi_r(C_k) * \tilde{F}_k.)$$ After calculating functions $\varphi_r$, the functions $\varphi_r$ may be optionally filtered by means of Wiener filters $\omega_1$ to $\omega_R$. The Wiener filters may be decoded and parsed from the bit stream. Finally, the decoded image is reconstructed summing the Wiener-filtered functions $$\hat{x}_\omega = \sum_{r=1}^{R} \omega_r * \phi_r.$$ The resulting decoded image is the processed by the next in-loop filter or forwarded to the picture buffer 28 and later used for subsequent predictions.

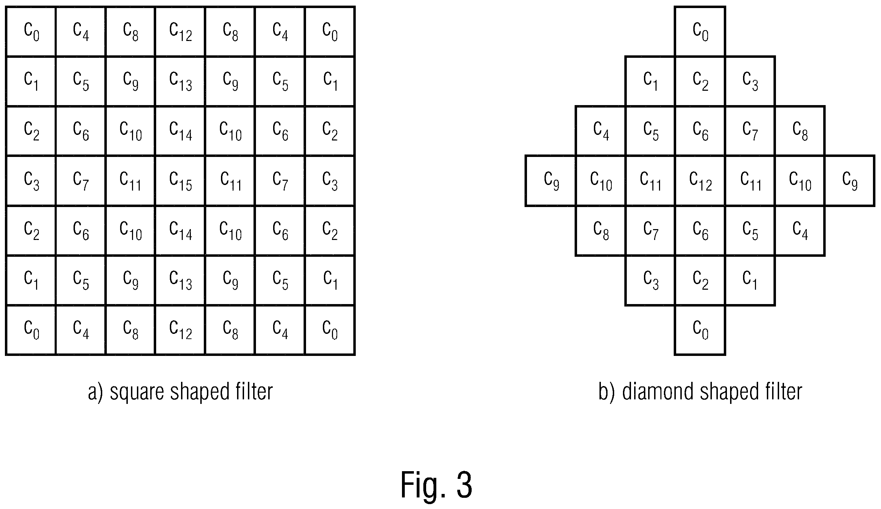

For the mentioned Wiener filters, different filter shapes are applicable. The filters could be e.g. square or diamond shaped, as shown in Figure 3, where (a) shows a square shaped filter and (b) shown a diamond shaped filter. These filters with the shown shapes are merely examples and are not meant to be limiting to these shapes.

In that example only 16 or 13 coefficients and the filter shape is decoded and parsed from the bitstream.

The position of the coefficient $c_{15}$ in case of a 7 × 7 square shaped filter or of the coefficient $c_{12}$ in case of a 7 × 7 diamond shaped filter indicates the pixel position. This coefficient is at the center position and is the position to be filtered. Both filter examples are rotational symmetric, i.e. if the pattern above is rotated 180 degrees, the coefficients are still in the same position. A special case may occur when $\omega_A$ = 0 and $\omega_B$ = 1 being filters of size 1 × 1. Then $\omega_A$ * $\phi_A$ = 0, yielding to

$$\hat{x}_\omega = \phi_B = \sum_{k=1}^{K} \chi_B(C_k) * \tilde{F}_k.$$ Since class B contains all coefficients whose absolute value are greater than a certain threshold $T$, $\chi_B$ becomes the hard thresholding operator. Ideally the non-significant coefficients in class A correspond to noise, while the significant coefficients in class B correspond to important features of the target image. In that case no filter coefficients have to be parsed from the bitstream.

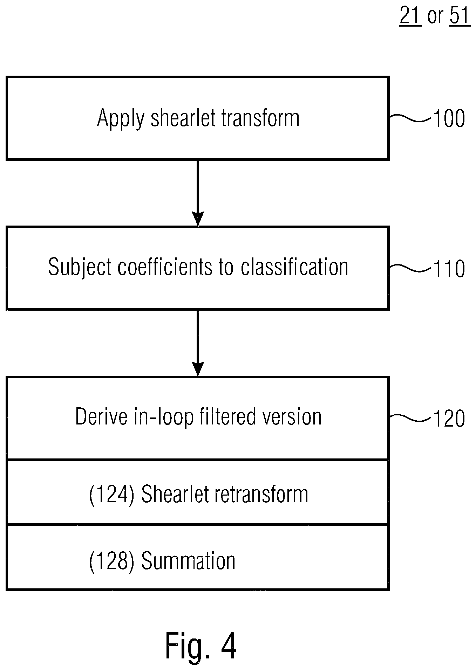

In an exemplary embodiment of the SLF of the in-loop filter, as shown in Fig.4, a shearlet transform with a set of shearlet filters $F_k$ is applied in a shearlet module 100 to at least a picture portion y. The picture portion may be the whole picture or a block or portion thereof such as a CTB, coding tree block known from HEVC, i.e. a block starting from which the picture is subdivided into coding units by recursive multi-partitioning, each coding unit being associated with a different coding mode among inter and intra coding. This is done by convoluting the filters $F_k$, wherein the number of filters is K, with the picture y, and a set of K coefficient matrices $C_1...C_K$ having each coefficients $C_k(i,j)$ is obtained. Then the individual coefficients of the set of coefficient matrices are subjected to a classification in a classification module 110 so as to obtain a set of partial coefficient matrices per coefficient matrix. This may be done for example using the characteristic function $\chi_r$ described above. Such classification may be a 'simple' thresholding' procedure, according to which for each shearlet coefficient specifically, the value of the respective coefficient is checked with respect to several intervals with one for each class, so as to determine the one which the respective coefficient falls into, but also other classifications techniques are possible such as a mapping of a portion including the respective shearlet coefficient along with its neighboring coefficients according to some function, and hence, the classification does not necessarily involve a thresholding. After classification, an in-loop filtered version of the picture portion, also above referred to as decoded image $\hat{x}_\omega$, is derived in a module 120 by i) retransforming 124 the set of partial coefficient matrices of the set of coefficient matrices using a set of dual shearlet filters and ii) summing 128, over all classes R, the retransformed partial coefficient matrices, wherein, for each coefficient matrix, the retransformed partial coefficient matrices differently contribute to the in-loop filtered version.

In an embodiment, the above mentioned classification may be, in a rather simple case, a 'binary' thresholding using a single threshold, thereby yielding two classes above and below the threshold value. In a more complex case two or more thresholds may be used. In a more general way, the classification may comprise that the coefficients of the set of coefficient matrices are classified, for each coefficient matrix, into two or more classes so that the set of partial coefficients matrices for the respective coefficient matrix comprises a partial coefficients matrix for each class within which coefficients not belonging to the respective class are zeroed. In other words, each coefficient matrix is split up into a set of complementary partial matrices which when added up result in the original coefficient matrix.

The classification of the coefficients may, in an embodiment, be performed by checking for each coefficient into which value interval of a set of value intervals the respective coefficient falls. Each value interval can be associated with one of the two or more classes. In the above example where one threshold with threshold value of 20 is applied, the two intervals $I_{A,B}$ associated with the two classes are $I_A = [0, 20]$ and $I_B = ]20, \infty[$, but this is obviously only an example. As described above, however, all embodiments described herein may be varied in that the classification is performed differently.

The filter information, in a further embodiment, may be derived by the decoder from a data stream, in this case the encoder may have added this information into the data stream before transmitting it. This filter information can be used to control, for each coefficient matrix, the manner at which the partial coefficient matrices of the respective coefficient matrix contribute to the in-loop filtered version.

In a further embodiment the above mentioned classification may be performed for each coefficient matrix by classifying the coefficients of the set of coefficient matrices into two or more classes so that the set of partial coefficients matrices for the respective coefficient matrix comprises a partial coefficients matrix for each class within which coefficients not belonging to the respective class are zeroed, as described above. Further, filter information may be derived from a data stream, the filter information indicating different sets of one or more filter coefficients for a subset of the two or more classes, e.g. coefficients $\omega_r$ of a Wiener filter. Deriving the in-loop filtered version of the picture portion may then comprise i) subjecting, for each of at least the subset of the two or more classes, the partial coefficient matrix of each of the set of coefficient matrices for the respective class to a shearlet retransform with the set of dual shearlet filters and a filtering using the set of one or more filter coefficients indicated by the filter information for the respective class so as to obtain a class-specific and filtered component signal for the respective class, above also referred to as functions $\varphi_1$ to $\varphi_R$, and summing the class-specific and filtered component signals of the subset of classes. In other words, the classification of each of the shearlet coefficient matrices results in a splitting of the coefficient matrices into a number of partial coefficient matrices. For each partial coefficient matrix only entries belonging to its class are maintained, all other entries are set to zero. Then the partial coefficient matrices are class-wise filtered, based on filter information extracted from a data stream, transformed back using shearlet re-transforms and summed up over all classes R used in the classification.

In a yet further embodiment the above mentioned classification may be performed for each coefficient matrix by classifying the coefficients of the set of coefficient matrices into two or more classes so that the set of partial coefficients matrices for the respective coefficient matrix comprises a partial coefficients matrix for each class within which coefficients not belonging to the respective class are zeroed. This has been described above. Further, filter information may be derived from a data stream, the filter information indicating different sets of one or more filter coefficients for a subset of the two or more classes. The in-loop filtered version of the picture portion is in this embodiment derived by i) subjecting, for each of at least the subset of the two or more classes, the partial coefficient matrix of each of the set of coefficient matrices for the respective class to a shearlet retransform with the set of dual shearlet filters so as to obtain a class-specific component signal for the respective class, ii) filtering the class-specific component signal of each class of the subset of the two or more classes using the set of one or more filter coefficients indicated by the filter information for the respective class, and then iii) summing the filtered class-specific component signals of the subset of classes. In other words, the classification of each of the shearlet coefficient matrices results in a splitting of the coefficient matrices into a number of partial coefficient matrices. For each partial coefficient matrix only entries belonging to its class are maintained, all other entries are set to zero. Then the partial coefficient matrices are transformed back using shearlet re-transforms, class-wise filtered, based on filter information extracted from a data stream, and summed up over all classes R used in the classification.

This yet further embodiment shows that the filtering can be applied after re-transforming the picture out of the shearlet domain, as opposed to the further embodiment described just before where the filtering may be applied still in the shearlet domain.

It is apparent that the mentioned subset of classes can also comprise all classes, e.g. none of the classes is omitted.

It should be noted that the subset of classes participating in the shearlet retransformation 128 may by a proper subset of the whole set of classes underlying the classification. For instance, in the above example of assigning to class A all coefficients below a certain magnitude, such as 20, with one or more other classes collecting all remaining coefficients of higher magnitude, class A may be discarded and class B be transformed only. The filtering such as the described Wiener filter, may be applied to class B, or, in accordance with a further embodiment, class B may be left unfiltered with no filter information of the subset of the one or more retransformed classes being transmitted in the data stream. The class excluded from retransforming may, however, also be another class not associated with the in terms of magnitude smallest interval. In other words, the classification may be done by checking for each coefficient into which of a set of value intervals the respective coefficient falls into. As mentioned before, each of the value intervals can be associated with one of the two or more classes. In this example, thus, the classes may be ordered according to their associated value intervals, namely along the order of the intervals along the domain of possible coefficient values. In the above examples, A was associated with an interval of values smaller than the interval for class B. In this scenario, the subset of the two or more classes involved in retransformation may exclude the class associated with a value interval covering coefficient values smallest in magnitude among the two or more classes. In other words, all classes are considered in further processing of the picture except for the class connected to the smallest coefficients. This may be advantageous because the smallest coefficients contribute relatively strong to quantization noise but do not contribute strongly to important structures of the image. Filtering of the subset of retransformed classes may take place or not.

A proper subset of all classes may also relate to the filtering. That is, it may be advantageous that all classes participate in the shearlet retransform, but that the filter using the Wiener filter for instance is restricted to the proper subset of classes only. For example, class A's retransform is filtered, while class B is left unfiltered. In the encoder, which determines the filter coefficients, this would manifest itself in a constraint in the optimization. Filter information signaling overhead could be kept lower thereby with, on the other hand, maybe merely minor reduction in coding efficiency.

Even alternatively, irrespective of the subset of filtered classes being a proper subset of the classes or not, the number of filter coefficients spent for each class in filter information conveyed in the data stream may vary such as, for instance, a larger number of filter coefficients for classes corresponding to a lower value interval compared to one corresponding to an interval of higher magnitudes.

In embodiments, the sets of one or more filter coefficients define a Wiener filter per class of the subset, i.e. all or merely a proper subset, of the two or more classes. It is apparent that filters are not confined to Wiener filters, but may also be de-blocking filters, sample adaptive offset filters, adaptive loop filters or the like. This information can be decoded from the received data stream and may be used in the decoding process.

Even though it has been referred to a picture portion to be processed, the present invention is not confined to picture portions, but also entire pictures can be processed according to the inventive technique. Also, the picture portion may refer to a coding block, and the decoder applied the prediction loop filter on each of the coding blocks.

The shearlet filters may be, in embodiments, defined by a number of combinations of scale and directional orientation of a shearlet basis function. This shearlet information may be decoded from the received data stream and be used in the decoding process.

In embodiments, the video decoder may be a block-based video decoder that derives a prediction of a current block of a current picture of a video via a prediction loop into which the prediction loop filter is connected. The prediction is derived from a reference picture of the video to which the picture portion belongs. The block-based video decoder reconstructs the current block by correcting the prediction using a prediction residual signaled in the received data stream.

The video decoder according to an embodiment may reconstruct the picture portion, i.e. the input to the LSF, using inter and/or intra prediction and prediction correction using a prediction residual decoding as has been shown in Fig. 1.

The video decoder may derive classification information from a data stream and use the derived classification information for the classification process. Alternatively, the classification information used in the classification process may be pre-set so that it is not necessary to transmit this information in the data stream.

Fig. 2 shows an apparatus 40 for encoding an input video. The exemplary apparatus 40 comprises subtractor 44, transformer/quantizer 46, inverse quantizer/inverse transformer 48, adder 58, in-loop filter 50, picture buffer 52, motion compensator 54, intra/inter mode selector 56, intra predictor 60 and entropy (en)coder 62.

Further, Fig. 2 shows that, internally, that the in-loop filter 50 may comprise de-blocking filter (DBF) 50a, sample adaptive offset filter (SAO) 50b and a shearlet-based loop filter (SLF) 51. Additionally, but not depicted, the in-loop filter 50 may further comprise an adaptive loop filter (ALF) or other appropriate filters.

Video data is inputted to the apparatus 40 and serves both as one of the inputs of the subtractor 44 and as input for intra predictor 60. The output of the subtractor 44 is input to transformer/quantizer 46, the output of which is used input for inverse quantizer/inverse transformer 48 and entropy coder 62. The output of the inverse quantizer/inverse transformer 48 is one of the inputs of adder 58, its output is input into the in-loop filter 50. The output of the in-loop filter 50 is connected to the input of picture buffer 52, the output of picture buffer 52 is connected to the input of motion compensator 54. The output of motion compensator 54 is connected to one of the inputs of intra/inter mode selector 56, the other input of intra/inter mode selector 56 is the output of intra predictor 60, and the output of intra/inter mode selector 56 is the second input of subtractor 44. The entropy coder 62 has as output the video stream.

The encoding apparatus 40 receives video data 42 as input and has as output the encoded bitstream comprising target images x.

For the operation of the in-loop filter, namely for the constituent SLF filter, a shearlet system has to be provided. In general, the shearlet system, i.e. number of scales and directions, may be predetermined so that no information has to be transmitted. Alternatively, greater flexibility can be achieved by appropriately choosing the shearlet system depending on features of the target image x. It may be preferred that these parameters are chosen once for the whole video sequence, but it also may be preferred that these parameters be adjusted during the video sequence.

Regarding the number of filters of the shearlet system, for a target image with high variance a shearlet system is required with many filters to achieve a good de-noising performance. The number of filters is also a complexity issue as more shearlet filters require more operations to process the loop filter. The number of scales and directions is coded, e.g. entropy coded, and transmitted to the decoder. The threshold T which is used in the thresholding process is determined by the distortion of y, being the decoded image of size NxM after all possible in-loop filters like DBF, SAO, ALF or the like, and will be calculated by $T = \kappa \, |x - y|$, where $\kappa$ is a universal constant that can be found experimentally. Threshold T may be encoded in the bitstream as classification information, similar to the number of scales and directions forming the shearlet information which also may be encoded into the bitstream.

When the shearlet system and threshold T are established the shearlet transform is applied in the manner described above and the resulting shearlet coefficients are classified according to the determined classes.

Further, the coefficients of Wiener filters $\omega_1$ to $\omega_R$ are calculated. Then the shearlet transform is performed and the shearlet coefficients are classified. Then functions $\varphi_1$ to $\varphi_R$ are calculated as described before.

Then the Wiener filters may be applied to the calculated functions $\varphi_r$. To obtain the optimal filter coefficients of $\omega_1$ to $\omega_R$ it may be preferable to minimize the mean square error between the target image $x$ and the filtered image $\hat{x}_\omega = \sum_{r=1}^{R} \omega_r * \phi_r$, namely by minimizing $\| x - \hat{x}_\omega \|$ with respect to $\omega = (\omega_1, ..., \omega_R)$. This may include the following steps: i) establish an expression for the square difference between the target and the filtered image, ii) minimize this difference by calculating the partial derivative with respect to each filter coefficient and set it to 0. In case of a $7 \times 7$ square shaped filter this results in R, R being the number of classes, sets of 16 linear equations, one for each coefficient $c_0$ to $c_{15}$, and iii) solve these sets of equations using a standard equation solver.

After the calculation of the filter coefficients, they are quantized in a similar way as the transform coefficients in standard video coding. These quantized filter coefficients are then coded losslessly, e.g. by entropy coding, and transmitted to the decoder.

What is apparent to the person skilled in the art of video codecs is that the advantageous difference over known techniques is that the Wiener filters may be not applied to the decoded image y itself, but rather in the shearlet domain to the functions $\varphi_r$. As described before, the Wiener filters may also be applied after re-transforming from the shearlet domain into the picture domain. Nevertheless, in some embodiments, Wiener filters may not be applied at all, hence Wiener filtering may be merely optional.

There is also the possibility of performing the shearlet-based loop filter on a block level. For each macro block the shearlet-base loop filter can be applied. It is assumed to perform the filter process for each coding tree unit (CTU) of size 128x128 or larger. The encoder can do a rate-distortion decision whether to use SLF. This implies computing a cost function based on the bit usage of Wiener filter coefficients and distortion improvement. Generally one bit is used for this indicator to signal to the decoder whether the CTU shall be filtered or not. In case the CTU shall not be filtered, no filter coefficients need to be coded and the next CTU is processed. In case the indicator decides to apply SLF for the current CTU, the performance of the filter is similar to SLF on a frame level. All information which have to be encoded in and decoded from the bitstream are performed in the same way as before, now instead of the whole frame only the current CTU is filtered.

In other words, a more general approach would be to perform the SLF on one big block included in a frame, instead of performing SLF for each CTU separately. Such a block could be fixed in size, e.g. 128x128, 256x256 or other sizes. The best position can be found, at the encoder side, by testing different block positions inside a frame and evaluating the respective position with rate distortion, RD, optimization. The best RD-performing block position will be chosen and signaled to the bit stream. The mentioned blocks may refer to any subdivision of a picture, and may, thus, be called picture portions. They may be restricted to be multiples of CTUs.

It is to be noted that the described encoding/decoding procedure may be performed for a portion of a picture, as well as o the entire picture. The portion of a picture may refer to a macro block, such a block subjected to the procedure may be rectangular or even quadratic. However, this is merely an example and should not be treated as a limiting alternative embodiment of the present application.

According to an embodiment of the video encoder, the video encoder comprises a prediction loop filter, which is configured to apply a shearlet transform with a set of shearlet filters onto at least a picture portion so as to obtain a set of coefficient matrices, to subject coefficients of the set of coefficient matrices to classification so as to obtain a set of partial coefficient matrices per coefficient matrix, and to derive an in-loop filtered version of the picture portion by subjecting the set of partial coefficient matrices of the set of coefficient matrices to a shearlet retransform with a set of dual shearlet filters and summation, wherein, for each coefficient matrix, the partial coefficient matrices differently contribute to the in-loop filtered version.

In an embodiment, the above mentioned classification may be, in a rather simple case, a 'binary' thresholding using a single threshold, yielding two classes above and below the threshold value. In a more complex case two or more thresholds may be used. And in a more general way, the classification may comprise that the coefficients of the set of coefficient matrices are classified, for each coefficient matrix, into two or more classes so that the set of partial coefficients matrices for the respective coefficient matrix comprises a partial coefficients matrix for each class within which coefficients not belonging to the respective class are zeroed. In other words, each coefficient matrix is split up into a set of complementary partial matrices which when added up result in the original coefficient matrix.

The classification of the coefficients may, in an embodiment, be performed by determining, for each coefficient, into which value interval of a set of value intervals the respective coefficient falls. Each value interval can be associated with one of the two or more classes. In the above example where one threshold with threshold value of 20 is applied, the two intervals $I_{A,B}$ associated with the two classes are $I_A = [0, 20]$ and $I_B = (20, \infty)$.

In an embodiment, the set of shearlet filters may be defined by a predefined number of combinations of a scale and directional orientation of a shearlet basis function, in an alternate embodiment the set of shearlet filters may be defined by shearlet information being an adaptive number of combinations of a scale and directional orientation of a shearlet basis function, wherein the combinations are chosen depending on features of a picture to be coded to which the picture portion belongs. In other words, the shearlet filters may be fixedly predetermined or are flexible adaptive, the latter case can be optimally adapted to the need of the pictures to be coded but may require that information, which may be said shearlet information, regarding the particular set of parameters defining the shearlet filters be transmitted by the encoder to the decoder.

Regarding the classification when for example one or more thresholds are used in the classification process, the encoder may determine the threshold(s) - resp. the value(s) defining the threshold(s) - depending on the coding distortion. The coding distortion has been explained before and depends on the difference between the target and the decoded image.

In embodiments, the video encoder is performing a classification of the coefficient similar to the classification applied by the decoder. It is known that both decoder and encoder apply same principles in de/encoding. The difference is that the encoder inserts classification information being information about parameters that characterize the classification into the data stream, whereas the decoder extracts this information from the data stream. Next to the mentioned classification information, the encoder may also insert filter information characterizing used filters and/or shearlet information being information about the parameters used in the SLF, e.g. like a number of combinations of a scale and directional orientation of a shearlet basis function, into the data stream. Regarding the shearlet information, like for the decoder, this information may be fixed or predetermined, but also may be adaptively chosen depending on features of the picture portion to be encoded.

Also, in embodiments, the encoder may encode, instead of the mentioned picture portion, the entire picture, or also coding block(s) of the picture.

The video encoder may in embodiments be a block-based encoder that derives a prediction of a current block of a current picture of a video via a prediction loop into which the prediction loop filter is connected, from a reference picture of the video to which the picture portion belongs, and that determines a prediction residual that allows to reconstruct the current block by correcting the prediction using the prediction residual. This encode may that insert the prediction residual into the data stream.

In further embodiments, the encoder may encode the picture portion using inter and/or intra prediction and may use a prediction residual encoding so that the picture portion is derivable from the inter and/or intra prediction corrected according to a prediction correction encoded by the prediction residual.

The encoder may determine, for the applied classification, at least one threshold to be used in the classification, wherein the threshold(s) is/are determined depending on a coding distortion being the difference between the target and decoded image. This thresholding information forms part of the classification information that may be inserted into the data stream.

After having explained the internal structure of decoder 10 and encoder 40, it should be noted that the implementation of encoder 10 may be done in software, firmware or hardware or any combination thereof. Any block or module shown in Figs. 1 or 2 may, accordingly, correspond to a certain portion of a computer program running on a computer, a certain portion of a firmware such as a field programmable array, or a certain portion of an electronic circuit such as an application-specific IC.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by or using a hardware apparatus, like for example, a microprocessor, a programmable computer or an electronic circuit. In some embodiments, one or more of the most important method steps may be executed by such an apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

The inventive encoded video bitstream can be stored on a digital storage medium or can be transmitted on a transmission medium such as a wireless transmission medium or a wired transmission medium such as the Internet.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. Video decoder (10) comprising a prediction loop filter, the prediction loop filter configured to

   apply a shearlet transform with a set of shearlet filters (21) onto at least a picture portion so as to obtain a set of coefficient matrices;
   subject coefficients of the set of coefficient matrices to classification so as to obtain a set of partial coefficient matrices per coefficient matrix, the subjecting comprising, for each coefficient matrix, classifying the coefficients of the respective coefficient matrix into two or more classes so that the set of partial coefficients matrices for the respective coefficient matrix comprises a partial coefficients matrix for each class within which coefficients not belonging to the respective class are zeroed;
   derive filter information from a data stream (12), the filter information indicating different sets of one or more filter coefficients for a subset of the two or more classes;
   derive an in-loop filtered version of the picture portion, so that the deriving the in-loop filtered version of the picture portion comprises

   subjecting, for each of at least the subset of the two or more classes, the partial coefficient matrix of each of the set of coefficient matrices for the respective class to an inverse shearlet transform with a set of dual shearlet
   filters so as to obtain a class-specific component signal for the respective class,
   filtering the class-specific component signal of each class of the subset of the two or more classes using the set of one or more filter coefficients indicated by the filter information for the respective class, and summing the filtered class-specific component signals of the subset of classes,

   wherein the subset of the two or more classes comprises all classes or excludes at least one class.

2. Video decoder (10) according to claim 1, wherein the classification of the coefficients is done by checking for each coefficient into which of a set of value intervals the respective coefficient falls into, each value intervals being associated with one of the two or more classes, wherein the at least one class comprises a class
   associated with a value interval covering coefficient values smallest in magnitude among the two or more classes, or
   associated with a value interval covering coefficient values largest in magnitude among the two or more classes.

3. Video decoder (10) according to any of the preceding claims, wherein the sets of one or more filter coefficients define a Wiener filter per class of the subset of the two or more classes.

4. Video decoder (10) according to any of the preceding claims, wherein the picture portion is a coding block of a set of coding blocks of the picture and the video decoder (10) is configured to separately apply the prediction loop filter onto each of the set of coding blocks.

5. Video decoder (10) according to any of the preceding claims, the video decoder is configured to derive the set of shearlet filters (21) from a data stream (12) and/or classification information from the data stream (12) and to use the derived classification information to adjust the classification.

6. Video encoder (40) comprising a prediction loop filter, the prediction loop filter configured to
   apply a shearlet transform with a set of shearlet filters (51) onto at least a picture portion so as to obtain a set of coefficient matrices;
   subject coefficients of the set of coefficient matrices to classification so as to obtain a set of partial coefficient matrices per coefficient matrix, the subjecting comprising, for each coefficient matrix, classifying the coefficients of the respective coefficient matrix into two or more classes so that the set of partial coefficients matrices for the respective coefficient matrix comprises a partial coefficients matrix for each class within which coefficients not belonging to the respective class are zeroed;
   determine filter information, the filter information indicating different sets of one or more filter coefficients for a subset of the two or more classes; derive an in-loop filtered version of the picture portion,
   so that the deriving the in-loop filtered version of the picture portion comprises

   subjecting, for each of at least the subset of the two or more classes, the partial coefficient matrix of each of the set of coefficient matrices for the respective class to an inverse shearlet transform with a set of dual shearlet
   filters so as to obtain a class-specific component signal for the respective class,
   filtering the class-specific component signal of each class of the subset of the two or more classes using the set of one or more filter coefficients indicated by the filter information for the respective class, and summing the filtered class-specific component signals of the subset of classes,

wherein the subset of the two or more classes comprises all classes or excludes at least one class.

7. Video encoder (40) according to any of claim 6, further comprising inserting the filter information into a data stream (64).

8. Video encoder (40) according to claim 6 or 7, wherein the classification of the coefficients is done by checking for each coefficient into which of a set of value intervals the respective coefficient falls into, each value intervals being associated with one of the two or more classes, wherein the at least one class comprises a class associated with a value interval covering coefficient values smallest in magnitude among the two or more classes, or associated with a value interval covering coefficient values largest in magnitude among the two or more classes.

9. Video encoder (40) according to any of claims 6-8, wherein the sets of one or more filter coefficients define a Wiener filter per class of the subset of the two or more classes.

10. Video encoder (40) according to any of claims 6-9, wherein the picture portion is a coding block of a set of coding blocks of the picture and the video encoder (40) is configured to separately apply the prediction loop filter onto each of the set of coding blocks.

11. Video encoder (40) according to any of claims 6-10, wherein the set of shearlet filters (51) is defined by a number of combinations of a scale and directional orientation of a shearlet basis function.

12. Video encoder (40) according to any of claims 6-11, the video encoder (40) is configured to determine the set of shearlet filters (51) and to insert shearlet information on the set of shearlet filters into a data stream (64).

13. Method for a video decoder comprising a prediction loop filter, the method comprising:

applying (100) a shearlet transform with a set of shearlet filters onto at least a picture portion so as to obtain a set of coefficient matrices; subjecting (110) coefficients of the set of coefficient matrices to classification so as to obtain a set of partial coefficient matrices per coefficient matrix, the subjecting comprising, for each coefficient matrix, classifying the coefficients of the respective coefficient matrix into two or more classes so that the set of partial coefficients matrices for the respective coefficient matrix comprises a partial coefficients matrix for each class within which coefficients not belonging to the respective class are zeroed; deriving filter information from a data stream (12), the filter information indicating different sets of one or more filter coefficients for a subset of the two or more classes; deriving (120) an in-loop filtered version of the picture portion, so that the deriving the in-loop filtered version of the picture portion comprises

subjecting, for each of at least the subset of the two or more classes, the partial coefficient matrix of each of the set of coefficient matrices for the respective class to an inverse shearlet transform with a set of dual shearlet filters so as to obtain a class-specific component signal for the respective class, filtering the class-specific component signal of each class of the subset of the two or more classes using the set of one or more filter coefficients indicated by the filter information for the respective class, and summing the filtered class-specific component signals of the subset of classes,

wherein the subset of the two or more classes comprises all classes or excludes at least one class.

14. Method for a video encoder comprising a prediction loop filter, the method comprising

applying (100) a shearlet transform with a set of shearlet filters onto at least a picture portion so as to obtain a set of coefficient matrices; subjecting (110) coefficients of the set of coefficient matrices to classification so as to obtain a set of partial coefficient matrices per coefficient matrix, the subjecting comprising, for each coefficient matrix, classifying the coefficients of the respective coefficient matrix into two or more classes so that the set of partial coefficients matrices for the respective coefficient matrix comprises a partial coefficients matrix for each class within which coefficients not belonging to the respective class are zeroed; determining filter information, the filter information indicating different sets of one or more filter coefficients for a subset of the two or more classes; deriving (120) an in-loop filtered version of the picture portion, so that the deriving the in-loop filtered version of the picture portion comprises

subjecting, for each of at least the subset of the two or more classes, the partial coefficient matrix of each of the set of coefficient matrices for the respective class to an inverse shearlet transform with a set of dual shearlet

filters so as to obtain a class-specific component signal for the respective class,

filtering the class-specific component signal of each class of the subset of the two or more classes using the set of one or more filter coefficients indicated by the filter information for the respective class, and

summing the filtered class-specific component signals of the subset of classes,

wherein the subset of the two or more classes comprises all classes or excludes at least one class.

15. Computer program having a program code for performing, when running on a computer, a method according to claim 13 or 14.

**Patentansprüche**

1. Videodecodierer (10), der ein Prädiktionsschleifenfilter aufweist, wobei das Prädiktionsschleifenfilter dazu ausgelegt ist,

eine Shearlet-Transformation mit einem Satz von Shearlet-Filtern (21) an zumindest einem Bildabschnitt auszuüben, um einen Satz von Koeffizientenmatrizen zu erhalten;

an Koeffizienten des Satzes von Koeffizientenmatrizen eine Klassifizierung durchzuführen, um einen Satz von Teilkoeffizientenmatrizen pro Koeffizientenmatrix zu erhalten, wobei das Durchführen für jede Koeffizientenmatrix ein Klassifizieren der Koeffizienten der jeweiligen der Koeffizientenmatrix in zwei oder mehr Klassen aufweist, so dass der Satz von Teilkoeffizientenmatrizen für die jeweilige Koeffizientenmatrix eine Teilkoeffizientenmatrix für jede Klasse aufweist, in der Koeffizienten, die nicht zu der jeweiligen Klasse gehören, auf null gesetzt werden; Filterinformationen von einem Datenstrom (12) abzuleiten, wobei die Filterinformationen unterschiedliche Sätze eines oder mehrerer Filterkoeffizienten für einen Teilsatz der zwei oder mehr Klassen angeben;

eine schleifenintern gefilterte Version des Bildabschnitts abzuleiten, so dass das Ableiten der schleifenintern gefilterten Version des Bildabschnitts folgendes aufweist:

Durchführen, für jede zumindest des Teilsatzes der zwei oder mehr Klassen, einer inversen Shearlet-Transformation mit einem Satz von dualen Shearlet-Filtern an der Teilkoeffizientenmatrix jeder des Satzes von Koeffizientenmatrizen für die jeweilige Klasse, um ein klassenspezifisches Komponentensignal für die jeweilige Klasse zu erhalten,

Filtern des klassenspezifischen Komponentensignals jeder Klasse des Teilsatzes der zwei oder mehr Klassen unter Verwendung des Satzes eines oder mehrerer Filterkoeffizienten, die durch die Filterinformationen angegeben sind, für die jeweilige Klasse, und

Summieren der gefilterten klassenspezifischen Komponentensignale des Teilsatzes von Klassen,

wobei der Teilsatz der zwei oder mehr Klassen alle Klassen aufweist oder zumindest eine Klasse ausschließt.

2. Videodecodierer (10) gemäß Anspruch 1, bei dem die Klassifizierung der Koeffizienten durch Prüfen für jeden Koeffizienten erfolgt, in den aus einem Satz von Wertintervallen der jeweilige Koeffizient fällt, wobei jeder Wertintervall einer der zwei oder mehr Klassen zugeordnet ist, wobei die zumindest eine Klasse eine Klasse aufweist, die

einem Wertintervall zugeordnet ist, das Koeffizientenwerte abdeckt, die von den zwei oder mehr Klassen den geringsten Betrag aufweisen, oder

einem Wertintervall zugeordnet ist, das Koeffizientenwerte abdeckt, die von den zwei oder mehr Klassen den größten Betrag aufweisen.

3. Videodecodierer (10) gemäß einem der vorhergehenden Ansprüche, bei dem die Sätze eines oder mehrerer Filterkoeffizienten ein Wiener-Filter pro Klasse des Teilsatzes der zwei oder mehr Klassen definieren.

4. Videodecodierer (10) gemäß einem der vorhergehenden Ansprüche, bei dem der Bildabschnitt ein Codierungsblock eines Satzes von Codierungsblöcken des Bildes ist und der Videodecodierer (10) dazu ausgelegt ist, das Prädiktionsschleifenfilter an jeden des Satzes von Codierungsblocks getrennt anzulegen.

5. Videodecodierer (10) gemäß einem der vorhergehenden Ansprüche, wobei der Videodecodierer dazu ausgelegt ist, den Satz von Shearlet-Filtern (21) von einem Datenstrom (12) und/oder Klassifikationsinformationen von dem Datenstrom (12) abzuleiten und die abgeleiteten Klassifizierungsinformationen zum Anpassen der Klassifizierung zu verwenden.

6. Videocodierer (40), der ein Prädiktionsschleifenfilter aufweist, wobei das Prädiktionsschleifenfilter dazu ausgelegt ist,

eine Shearlet-Transformation mit einem Satz von Shearlet-Filtern (21) an zumindest einem Bildabschnitt auszuüben, um einen Satz von Koeffizientenmatrizen zu erhalten;

an Koeffizienten des Satzes von Koeffizientenmatrizen eine Klassifizierung durchzuführen, um einen Satz von Teilkoeffizientenmatrizen pro Koeffizientenmatrix zu erhalten, wobei das Durchführen für jede Koeffizientenmatrix ein Klassifizieren der Koeffizienten der jeweiligen der Koeffizientenmatrix in zwei oder mehr Klassen aufweist, so dass der Satz von Teilkoeffizientenmatrizen für die jeweilige Koeffizientenmatrix eine Teilkoeffizientenmatrix für jede Klasse aufweist, in der Koeffizienten, die nicht zu der jeweiligen Klasse gehören, auf null gesetzt werden; Filterinformationen zu bestimmen, wobei die Filterinformationen unterschiedliche Sätze eines oder mehrerer Filterkoeffizienten für einen Teilsatz der zwei oder mehr Klassen angeben; eine schleifenintern gefilterte Version des Bildabschnitts abzuleiten, so dass das Ableiten der schleifenintern gefilterten Version des Bildabschnitts folgendes aufweist:

> Durchführen, für jede zumindest des Teilsatzes der zwei oder mehr Klassen, einer inversen Shearlet-Transformation mit einem Satz von dualen Shearlet-Filtern an der Teilkoeffizientenmatrix jeder des Satzes von Koeffizientenmatrizen für die jeweilige Klasse, um ein klassenspezifisches Komponentensignal für die jeweilige Klasse zu erhalten,
> Filtern des klassenspezifischen Komponentensignals jeder Klasse des Teilsatzes der zwei oder mehr Klassen unter Verwendung des Satzes eines oder mehrerer Filterkoeffizienten, die durch die Filterinformationen angegeben sind, für die jeweilige Klasse, und
> Summieren der gefilterten klassenspezifischen Komponentensignale des Teilsatzes von Klassen,

wobei der Teilsatz der zwei oder mehr Klassen alle Klassen aufweist oder zumindest eine Klasse ausschließt.

7. Videocodierer (40) gemäß Anspruch 6, der ferner ein Einfügen der Filterinformationen in einen Datenstrom (64) aufweist.

8. Videocodierer (40) gemäß Anspruch 6 oder 7, bei dem die Klassifizierung der Koeffizienten durch Prüfen für jeden Koeffizienten erfolgt, in den, von einem Satz von Wertintervallen, der jeweilige Koeffizient fällt, wobei jeder Wertintervall einer der zwei oder mehr Klassen zugeordnet ist, wobei die zumindest eine Klasse eine Klasse aufweist, die einem Wertintervall zugeordnet ist, das Koeffizientenwerte abdeckt, die von den zwei oder mehr Klassen den geringsten Betrag aufweisen, oder einem Wertintervall zugeordnet ist, das Koeffizientenwerte abdeckt, die von den zwei oder mehr Klassen den größten Betrag aufweisen.

9. Videocodierer (40) gemäß einem der Ansprüche 6 bis 8, bei dem die Sätze eines oder mehrerer Filterkoeffizienten ein Wiener-Filter pro Klasse des Teilsatzes der zwei oder mehr Klassen definieren.

10. Videocodierer (40) gemäß einem der Ansprüche 6 bis 9, bei dem der Bildabschnitt ein Codierungsblock eines Satzes von Codierungsblöcken des Bildes ist und der Videocodierer (40) dazu ausgelegt ist, das Prädiktionsschleifenfilter an jeden des Satzes von Codierungsblocks getrennt anzulegen.

11. Videocodierer (40) gemäß einem der Ansprüche 6 bis 10, bei dem der Satz von Shearlet-Filtern (51) durch eine Anzahl von Kombinationen einer Skala und Richtungsorientierung einer Shearlet-Basisfunktion definiert ist.

12. Videocodierer (40) gemäß einem der Ansprüche 6 bis 11, wobei der Videocodierer (40) dazu ausgelegt ist, den Satz von Shearlet-Filtern (51) zu bestimmen und Shearlet-Informationen über den Satz von Shearlet-Filtern in einen Datenstrom (64) einzufügen.

13. Verfahren für einen Videodecodierer, der ein Prädiktionsschleifenfilter aufweist, wobei das Verfahren folgende Schritte aufweist:

> Ausüben (100) einer Shearlet-Transformation mit einem Satz von Shearlet-Filtern an zumindest einem Bildabschnitt, um einen Satz von Koeffizientenmatrizen zu erhalten;
> Durchführen (110) einer Klassifizierung an Koeffizienten des Satzes von Koeffizientenmatrizen, um einen Satz von Teilkoeffizientenmatrizen pro Koeffizientenmatrix zu erhalten, wobei das Durchführen für jede Koeffizientenmatrix ein Klassifizieren der Koeffizienten der jeweiligen der Koeffizientenmatrix in zwei oder mehr Klassen aufweist, so dass der Satz von Teilkoeffizientenmatrizen für die jeweilige Koeffizientenmatrix eine Teilkoeffizientenmatrix für jede Klasse aufweist, in der Koeffizienten, die nicht zu der jeweiligen Klasse gehören, auf null gesetzt werden;
> Ableiten von Filterinformationen von einem Datenstrom (12), wobei die Filterinformationen unterschiedliche Sätze eines oder mehrerer Filterkoeffizienten für einen Teilsatz der zwei oder mehr Klassen angeben;
> Ableiten (120) einer schleifenintern gefilterten Version des Bildabschnitts, so dass das Ableiten der schleifenintern gefilterten Version des Bildabschnitts folgendes aufweist:

Durchführen, für jede zumindest des Teilsatzes der zwei oder mehr Klassen, einer inversen Shearlet-Transformation mit einem Satz von dualen Shearlet-Filtern an der Teilkoeffizientenmatrix jeder des Satzes von Koeffizientenmatrizen für die jeweilige Klasse, um ein klassenspezifisches Komponentensignal für die jeweilige Klasse zu erhalten,

Filtern des klassenspezifischen Komponentensignals jeder Klasse des Teilsatzes der zwei oder mehr Klassen unter Verwendung des Satzes eines oder mehrerer Filterkoeffizienten, die durch die Filterinformationen angegeben sind, für die jeweilige Klasse, und

Summieren der gefilterten klassenspezifischen Komponentensignale des Teilsatzes von Klassen,

wobei der Teilsatz der zwei oder mehr Klassen alle Klassen aufweist oder zumindest eine Klasse ausschließt.

14. Verfahren für einen Videocodierer, der ein Prädiktionsschleifenfilter aufweist, wobei das Verfahren folgende Schritte aufweist:

Ausüben (100) einer Shearlet-Transformation mit einem Satz von Shearlet-Filtern an zumindest einem Bildabschnitt, um einen Satz von Koeffizientenmatrizen zu erhalten;

Durchführen (110) einer Klassifizierung an Koeffizienten des Satzes von Koeffizientenmatrizen, um einen Satz von Teilkoeffizientenmatrizen pro Koeffizientenmatrix zu erhalten, wobei das Durchführen für jede Koeffizientenmatrix ein Klassifizieren der Koeffizienten der jeweiligen der Koeffizientenmatrix in zwei oder mehr Klassen aufweist, so dass der Satz von Teilkoeffizientenmatrizen für die jeweilige Koeffizientenmatrix eine Teilkoeffizientenmatrix für jede Klasse aufweist, in der Koeffizienten, die nicht zu der jeweiligen Klasse gehören, auf null gesetzt werden;

Bestimmen von Filterinformationen, wobei die Filterinformationen unterschiedliche Sätze eines oder mehrerer Filterkoeffizienten für einen Teilsatz der zwei oder mehr Klassen angeben;

Ableiten (120) einer schleifenintern gefilterten Version des Bildabschnitts, so dass das Ableiten der schleifenintern gefilterten Version des Bildabschnitts folgendes aufweist:

Durchführen, für jede zumindest des Teilsatzes der zwei oder mehr Klassen, einer inversen Shearlet-Transformation mit einem Satz von dualen Shearlet-Filtern an der Teilkoeffizientenmatrix jeder des Satzes von Koeffizientenmatrizen für die jeweilige Klasse, um ein klassenspezifisches Komponentensignal für die jeweilige Klasse zu erhalten,

Filtern des klassenspezifischen Komponentensignals jeder Klasse des Teilsatzes der zwei oder mehr Klassen unter Verwendung des Satzes eines oder mehrerer Filterkoeffizienten, die durch die Filterinformationen angegeben sind, für die jeweilige Klasse, und

Summieren der gefilterten klassenspezifischen Komponentensignale des Teilsatzes von Klassen,

wobei der Teilsatz der zwei oder mehr Klassen alle Klassen aufweist oder zumindest eine Klasse ausschließt.

15. Computerprogramm mit einem Programmcode zum Durchführen, wenn es auf einem Computer abläuft, eines Verfahrens gemäß Anspruch 13 oder 14.

**Revendications**

1. Décodeur vidéo (10) comprenant un filtre à boucle de prédiction, le filtre à boucle de prédiction étant configuré pour

appliquer une transformée par cisaillement au moyen d'un ensemble de filtres de cisaillement (21) à au moins une partie d'image de manière à obtenir un ensemble de matrices de coefficients;

soumettre les coefficients de l'ensemble de matrices de coefficients à une classification de manière à obtenir un ensemble de matrices de coefficients partielles par matrice de coefficients, la soumission comprenant, pour chaque matrice de coefficients, le fait de classifier les coefficients de la matrice de coefficients respective en deux ou plusieurs classes de sorte que l'ensemble des matrices de coefficients partielles pour la matrice de coefficients respective comprenne une matrice de coefficients partielle pour chaque classe dans laquelle sont mis à zéro les coefficients n'appartenant pas à la classe respective;

dériver les informations de filtre d'un flux de données (12), les informations de filtre indiquant différents ensembles d'un ou plusieurs coefficients de filtre pour un sous-ensemble des deux ou plusieurs classes;

dériver une version filtrée en boucle de la partie d'image, de sorte que la dérivation de la version filtrée en boucle de la partie d'image comprenne le fait de

soumettre, pour chacune d'au moins le sous-ensemble des deux ou plusieurs classes, la matrice de coefficients partielle de chacune de l'ensemble de matrices de coefficients pour la classe respective à une transformée par cisaillement inverse à l'aide de l'ensemble de filtres de double cisaillement de manière à obtenir un signal de composante spécifique à la classe pour la classe respective,

filtrer le signal de composant spécifique à la classe de chaque classe du sous-ensemble des deux ou plusieurs classes à l'aide de l'ensemble d'un ou plusieurs coefficients de filtre indiqués par les informations de filtre pour la classe respective, et

additionner les signaux de composante spécifiques à la classe filtrés du sous-ensemble de classes,

dans lequel le sous-ensemble des deux ou plusieurs classes comprend toutes les classes ou exclut au moins une classe.

2. Décodeur vidéo (10) selon la revendication 1, dans lequel la classification des coefficients est effectuée en vérifiant, pour chaque coefficient, celui parmi un ensemble d'intervalles de valeurs dans lequel tombe le coefficient respectif, chaque intervalle de valeurs étant associé à l'une des deux ou plusieurs classes, où l'au moins une classe comprend une classe associée à un intervalle de valeurs couvrant les valeurs de coefficient les plus petites en amplitude parmi les deux ou plusieurs classes, ou associée à un intervalle de valeurs couvrant les valeurs de coefficient les plus grandes en amplitude parmi les deux ou plusieurs classes.

3. Décodeur vidéo (10) selon l'une quelconque des revendications précédentes, dans lequel les ensembles d'un ou plusieurs coefficients de filtre définissent un filtre de Wiener par classe du sous-ensemble des deux ou plusieurs classes.

4. Décodeur vidéo (10) selon l'une quelconque des revendications précédentes, dans lequel la partie d'image est un bloc de codage d'un ensemble de blocs de codage de l'image et le décodeur vidéo (10) est configuré pour appliquer séparément le filtre à boucle de prédiction à chacun de l'ensemble de blocs de codage.

5. Décodeur vidéo (10) selon l'une quelconque des revendications précédentes, dans lequel le décodeur vidéo est configuré pour dériver l'ensemble de filtres de cisaillement (21) d'un flux de données (12) et/ou les informations de classification du flux de données (12) et pour utiliser les informations de classification dérivées pour ajuster la classification.

6. Codeur vidéo (40) comprenant un filtre à boucle de prédiction, le filtre à boucle de prédiction étant configuré pour

appliquer une transformée par cisaillement par un ensemble de filtres de cisaillement (51) à au moins une partie d'image de manière à obtenir un ensemble de matrices de coefficients;

soumettre les coefficients de l'ensemble de matrices de coefficients à une classification de manière à obtenir un ensemble de matrices de coefficients partielles par matrice de coefficients, la soumission comprenant, pour chaque matrice de coefficients, le fait de classifier les coefficients de la matrice de coefficients respective en deux ou plusieurs classes de sorte que l'ensemble des matrices de coefficients partielles pour la matrice de coefficients respective comprenne une matrice de coefficients partielle pour chaque classe dans laquelle sont mis à zéro les coefficients n'appartenant pas à la classe respective;

déterminer les informations de filtre, les informations de filtre indiquant différents ensembles d'un ou plusieurs coefficients de filtre pour un sous-ensemble des deux ou plusieurs classes;

dériver une version filtrée en boucle de la partie d'image, de sorte que la dérivation de la version filtrée en boucle de la partie d'image comprenne le fait de

soumettre, pour chacune d'au moins le sous-ensemble des deux ou plusieurs classes, la matrice de coefficients partielle de chacune de l'ensemble de matrices de coefficients pour la classe respective à une transformée par cisaillement inverse à l'aide de l'ensemble de filtres de double cisaillement de manière à obtenir un signal de composante spécifique à la classe pour la classe respective,

filtrer le signal de composant spécifique à la classe de chaque classe du sous-ensemble des deux ou plusieurs classes à l'aide de l'ensemble d'un ou plusieurs coefficients de filtre indiqués par les informations de filtre pour la classe respective, et

additionner les signaux de composante spécifiques à la classe filtrés du sous-ensemble de classes,

dans lequel le sous-ensemble des deux ou plusieurs classes comprend toutes les classes ou exclut au moins une classe.

7. Codeur vidéo (40) selon la revendication 6, comprenant par ailleurs le fait de insérer les informations de filtre dans un flux de données (64).

8. Codeur vidéo (40) selon la revendication 6 ou 7, dans lequel la classification des coefficients est effectuée en vérifiant, pour chaque coefficient, celui parmi un ensemble d'intervalles de valeurs dans lequel tombe le coefficient respectif, chaque intervalle de valeurs étant associé à l'une des deux ou plusieurs classes, où l'au moins une classe comprend une classe associée à un intervalle de valeurs couvrant les valeurs de coefficient les plus petites en amplitude parmi les deux ou plusieurs classes, ou associée à un intervalle de valeurs couvrant les valeurs de coefficient les plus grandes en amplitude parmi les deux ou plusieurs classes.

9. Codeur vidéo (40) selon l'une quelconque des revendications 6 à 8, dans lequel les ensembles d'un ou plusieurs coefficients de filtre définissent un filtre de Wiener par classe du sous-ensemble des deux ou plusieurs classes.

10. Codeur vidéo (40) selon l'une quelconque des revendications 6 à 9, dans lequel la partie d'image est un bloc de codage d'un ensemble de blocs de codage de l'image et le codeur vidéo (40) est configuré pour appliquer séparément le filtre à boucle de prédiction à chacun de l'ensemble des blocs de codage.

11. Codeur vidéo (40) selon l'une quelconque des revendications 6 à 10, dans lequel l'ensemble de filtres de cisaillement (51) est défini par un nombre de combinaisons d'une échelle et d'une orientation directionnelle d'une fonction de base de cisaillement.

12. Codeur vidéo (40) selon l'une quelconque des revendications 6 à 11, dans lequel le codeur vidéo (40) est configuré pour déterminer l'ensemble de filtres de cisaillement (51) et pour insérer les informations de cisaillement relatives à l'ensemble de filtres de cisaillement dans un flux de données (64).

13. Procédé pour faire fonctionner un décodeur vidéo comprenant un filtre à boucle de prédiction, le procédé comprenant le fait de:

appliquer (100) une transformée par cisaillement au moyen d'un ensemble de filtres de cisaillement à au moins une partie d'image de manière à obtenir un ensemble de matrices de coefficients;
soumettre (110) les coefficients de l'ensemble de matrices de coefficients à une classification de manière à obtenir un ensemble de matrices de coefficients partielles par matrice de coefficients, la soumission comprenant, pour chaque matrice de coefficients, le fait de classifier les coefficients de la matrice de coefficients respective en deux ou plusieurs classes de sorte que l'ensemble de matrices de coefficients partielles pour la matrice de coefficients respective comprenne une matrice de coefficients partielle pour chaque classe dans laquelle sont mis à zéro les coefficients n'appartenant pas à la classe respective;
dériver les informations de filtre d'un flux de données (12), les informations de filtre indiquant différents ensembles d'un ou plusieurs coefficients de filtre pour un sous-ensemble des deux ou plusieurs classes;
dériver une version filtrée en boucle de la partie d'image, de sorte que la dérivation de la version filtrée en boucle de la partie d'image comprenne le fait de

soumettre, pour chacune d'au moins le sous-ensemble des deux ou plusieurs classes, la matrice de coefficients partielle de chacune de l'ensemble de matrices de coefficients pour la classe respective à une transformée par cisaillement inverse à l'aide de l'ensemble de filtres de double cisaillement de manière à obtenir un signal de composante spécifique à la classe pour la classe respective,
filtrer le signal de composante spécifique à la classe de chaque classe du sous-ensemble des deux ou plusieurs classes à l'aide de l'ensemble d'un ou plusieurs coefficients de filtre indiqués par les informations de filtre pour la classe respective, et
additionner les signaux de composante spécifiques à la classe filtrés du sous-ensemble de classes,

dans lequel le sous-ensemble des deux ou plusieurs classes comprend toutes les classes ou exclut au moins une classe.

14. Procédé pour faire fonctionner un codeur vidéo comprenant un filtre à boucle de prédiction, le procédé comprenant le fait de
appliquer (100) une transformée par cisaillement au moyen d'un ensemble de filtres de cisaillement à au moins une partie d'image de manière à obtenir un ensemble de matrices de coefficients;
soumettre (110) les coefficients de l'ensemble de matrices de coefficients à une classification de manière à obtenir un ensemble de matrices de coefficients partielles par matrice de coefficients, la soumission comprenant, pour chaque matrice de coefficients, le fait de classifier les coefficients de la matrice de coefficients respective en deux ou plusieurs classes de sorte que l'ensemble de matrices de coefficients partielles pour la matrice de coefficients respective comprenne une matrice de coefficients partielle pour chaque classe dans laquelle sont mis à zéro les coefficients n'appartenant pas à la classe respective;
déterminer les informations de filtre, les informations de filtre indiquant différents ensembles d'un ou plusieurs coefficients de filtre pour un sous-ensemble des deux ou plusieurs classes;

dériver une version filtrée en boucle de la partie d'image, de sorte que la dérivation de la version filtrée en boucle de la partie d'image comprenne le fait de

> soumettre, pour chacune d'au moins le sous-ensemble des deux ou plusieurs classes, la matrice de coefficients partielle de chacune de l'ensemble de matrices de coefficients pour la classe respective à une transformée par cisaillement inverse à l'aide de l'ensemble de filtres de double cisaillement de manière à obtenir un signal de composante spécifique à la classe pour la classe respective,
> filtrer le signal de composant spécifique à la classe de chaque classe du sous-ensemble des deux ou plusieurs classes à l'aide de l'ensemble d'un ou plusieurs coefficients de filtre indiqués par les informations de filtre pour la classe respective, et
> additionner les signaux de composante spécifiques à la classe filtrés du sous-ensemble de classes,

dans lequel le sous-ensemble des deux ou plusieurs classes comprend toutes les classes ou exclut au moins une classe.

15. Programme d'ordinateur présentant un code de programme pour réaliser, lorsqu'il est exécuté sur un ordinateur, un procédé selon la revendication 13 ou 14.

Fig. 1

classification information / filter information / shearlet information

bitstream 12 → entropy decoder 14 → inverse quantizer/transformer 16 → (+) 18 → in-loop filter 20 (• DBF ~20a, • SAO ~20b, • SLF ~21) → video output 30

intra predictor 24

intra/inter mode selector 22

motion compensator 26

picture buffer 28

10

Fig. 2

b) diamond shaped filter

a) square shaped filter

Fig. 3

21 or 51

| Apply shearlet transform | ~100 |

↓

| Subject coefficients to classification | ~110 |

↓

| Derive in-loop filtered version | ~120 |
| (124) Shearlet retransform | |
| (128) Summation | |

# Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008153856 A1

- US 2013243104 A1

### Non-patent literature cited in the description

- **KAWAMURA K et al.** Adaptive Loop Filtering using directional activity. *96. MPEG meeting; 21-3-2011 - 25-3-2011; Geneva; (Motion picture expert group of ISO/IEC JTC1/SC29/WG11),* 18 March 2011
- **KUTYNIOK ; LABATE.** Shearlets: Multiscale Analysis for Multivariate Data. Springer, 2012

- Shearlets and optimally sparse approximations. **KUTYNIOK ; LEMVIG ; LIM.** Shearlets: Multiscale Analysis for Multivariate Data. Springer, 2012, 145-198